# EUROPEAN PATENT SPECIFICATION

(11) **EP 0 334 655 B1**
(45) Date of publication and mention of the grant of the patent: **19.05.1993**
(21) Application number: 89302916.5
(22) Date of filing: 23.03.1989
(51) Int. Cl.: F04F 7/00, F16J 15/00, F16J 15/56

(54) **Anti-leak seal for motor pump**
Leckagefreie Dichtung für Motorpumpen
Dispositif d'étanchéité sans fuite pour pompe motorisée

(30) Priority: 25.03.1988 US 173300
(43) Date of publication of application: 27.09.1989
(73) Proprietor: TITAN TOOL, INC., Oakland New Jersey 07436 (US)
(72) Inventor: Cowan, Philip L., Houston Texas 77008 (US)
(74) Representative: Hughes, Brian Patrick

(56) References cited:
- FR-A- 601 316
- FR-A- 1 021 340
- FR-A- 2 558 901
- GB-A- 25 143
- GB-A- 2 044 370

## Description

### FIELD OF THE INVENTION

This invention relates generally to apparatus having a pressurized fluid system for operation thereof and wherein leakage of pressurized fluid from the fluid system is ordinarily prevented by one or more seal members that through wear and deterioration from other causes, may develop leakage of fluid. More specifically, this invention relates to a method or methods for reducing leakage from sliding or rotating seals in hydraulic systems.

### BACKGROUND OF THE INVENTION

Many different types of mechanical devices are provided having pressurized fluid systems for operation thereof. The present invention, though being described particularly as it relates to double acting hydraulic motors such as is commonly used in paint pumps and the like, has a wide variety of applications in various and sundry fluid energized mechanisms wherein the methods of the present invention are applicable. The term "fluid" as utilized herein is intended to encompass a wide variety of liquid compositions including water, oil such as hydraulic oil and various other compositions including a liquid as a material constituent thereof. The term "liquid" as utilized herein is intended to mean any material or composition of materials capable of flowing, without regard to the particular viscosity thereof.

The use of hydraulic cylinders for a variety of mechanical applications is well known. In general, great care is taken in the design of the seals around the moving piston to prevent leakage of hydraulic oil out of the system. In spite of the best seal technology available, leakage is inevitable as the seals and piston wear during normal use of the apparatus. In most cases the initial leakage is small and is generally accepted. The hydraulic reservoir of the apparatus is refilled occasionally to replace the lost fluid.

In some applications any degree of leakage can have serious effect. One such application is a hydraulically operated paint pump which can be used to deliver paint to spray guns in industrial plants. Leakage of oil in this environment, even though slight, over extended periods of time can result in contamination of the paint supply. In some instances paint is stored in large containers and oil contamination can be very expensive because of the expensive paint that must be discarded as unuseable. This invention pertains to a method for automatically and inexpensively collecting oil which leaks from the cylinder and directing the leaked oil back into the hydraulic system, thus preventing it from causing contamination to materials or apparatus externally of the fluid energized motor or device.

Many different types of mechanical devices, such as the hydraulic motors for paint pumps, incorporate a housing structure having internal movable components and form or otherwise incorporate a pressurized fluid system for operation thereof. In most cases, the mechanical device, to provide a work output, will have an output shaft that rotates, reciprocates or includes a combination of rotation and reciprocation in its movement. The housing structure of the apparatus in such cases defines a passage through which the output shaft extends and a seal, such as a resilient O-ring or any other commercially available sealing device is utilized to establish a seal between the output shaft and the housing. Obviously, these sealing devices are always designed to prevent leakage of liquid materials such as lubricating oils, hydraulic oil, etc, from the mechanical device. Through normal wear, unusual seal erosion or other character of seal deterioration leakage will develop in time. In some cases, a small amount of leakage is tolerated until the apparatus can be shut down for repair. In many cases, especially in the cases of fluid motors for paint pumps, even a small amount of leakage can cause contamination of a large volume of paint, thereby requiring that the paint be discarded. In mechanical devices where even minimal seal leakage is undesirable the present invention has application. It is therefore desirable to provide an anti-leakage system for mechanical apparatus having a fluid energized system for operation thereof or a fluid system providing other necessary features such as lubrication, cooling, etc.

FR-A-10 21 340 discloses a method of accomplishing hydraulically energised vacuum induced movement of liquid in apparatus having a hydraulic system which develops negative pressure pulses, a valve being provided to isolate the liquid being moved from positive pressure pulses and ensure its movement only during negative pressure pulses.

The present invention is a method for recovering leaked liquid in apparatus having a hydraulic system for operation thereof which develops negative pressure pulses of a pressure below atmospheric pressure, said method being characterised by providing leakage collection means to receive said leaked liquid, and applying said negative pressure pulses to said leakage collection means for inducing flow of said leaked liquid from said leakage collection means in to said hydraulic system only during said negative pressure pulses.

The present invention is also characterised in that said secondary sealing element is in a form of an annular wiping ring having a thin circular wiping lip in contact with said internal movable element, said thin circular wiping lip being oriented to direct leaked liquid to said passage means.

### DESCRIPTION OF THE DRAWINGS

Embodiments of the present invention will now be described, by way of example, with reference to the accompanying drawings, in which:-
Fig. 1 is a vertical sectional view of a double acting hydraulic motor incorporating a reciprocating hydraulic cylinder such as might be utilized to drive a paint pump in industrial applications and incorporating a seal leakage collection system constructed in accordance with the present invention.
Fig. 2 is a similar vertical section of a double acting hydraulically energized motor which is representative of the prior art and which shows the hydraulic cylinder and drive shaft being moved downwardly.
Fig. 3 is a fragmentary sectional view of a double acting hydraulically energized motor incorporating a leakage collection system representing a modified embodiment of this invention.

### DETAILED DESCRIPTION OF PREFERRED EMBODIMENT

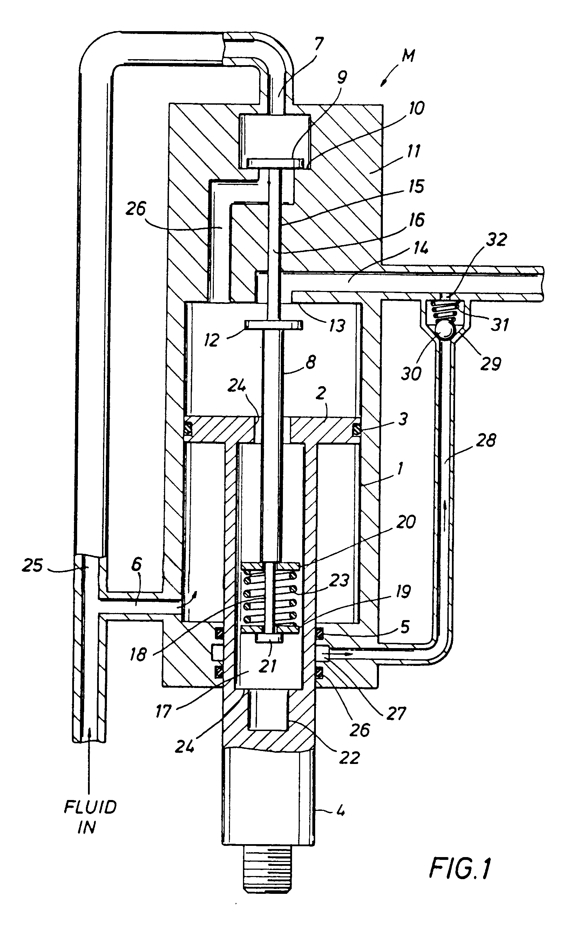

Referring now to the drawings, for the purpose of description of the invention, a reciprocating hydraulic cylinder will be considered. Such a cylinder is illustrated in Figs. 1, 2 and 3 and might be utilized to drive a paint pump in industrial applications. The hydraulic cylinder is merely representative of one possible embodiment of this invention and it is to be understood that this invention has application in many types of machines and devices employing pressurized fluid operating systems. The structure and operation of the hydraulic cylinder is as follows:

Referring now specifically to Fig. 1, the fluid from a pressurized hydraulic fluid supply is delivered to conduit 25 and enters the lower part of a cylinder 1 through conduit 6. A load bearing extension member 4 in the form of an elongated output shaft is formed integrally with or otherwise connected to a piston 2 which is disposed for reciprocation within the cylinder 1. The piston 2 is sealed against the inner cylindrical wall of the cylinder by means of a circular sealing element 3. The sealing element 3 may conveniently take the form of a circular resilient O-ring or any one of a number of other suitable circular sealing elements or sealing assemblies. Fluid entering conduit 7 from conduit 25 is prevented from entering into the cylinder by the sealing contact of valve member 9 on the annular seat 10. Because of the fluid pressure acting on the lower surface of the piston 2, the piston will move upwardly, thus also inducing upward movement of the load bearing extension 4 of the piston. Hydraulic oil in the cylinder 1 above the piston 2 will exhaust the cylinder through conduit 14 and thus return to a hydraulic reservoir. The hydraulic reservoir is in communication with a hydraulic pump which functions as the supply for pressurized hydraulic fluid.

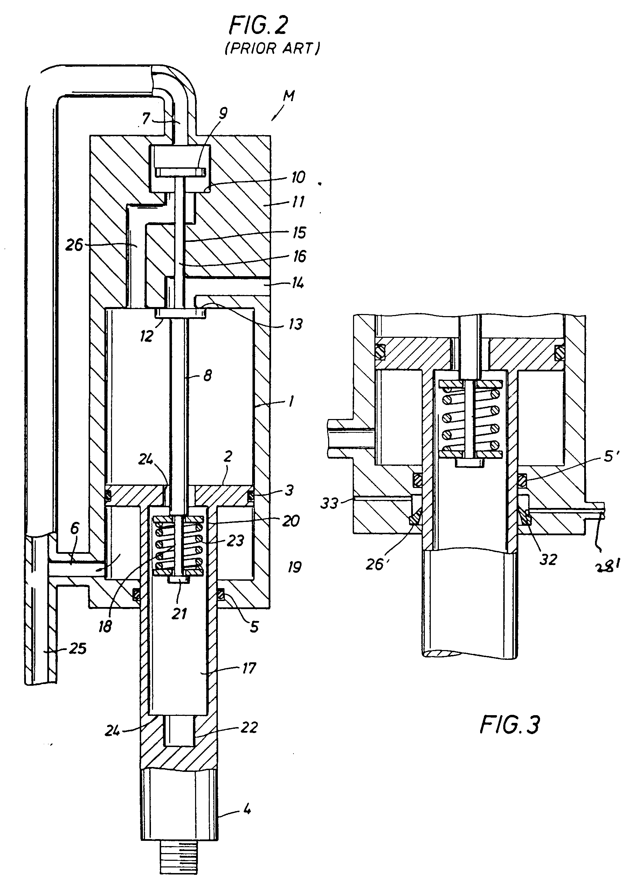

When the piston 2 nears the top of the cylinder the sliding collar 19 on the shaft 18 will contact the internal shoulder surface 24 defined by the interior surface configuration of the load hearing output shaft 4. The action of the hydraulic pressure on valve plate 9 holds the valve plate in place on the seat 10 and prevents the valve plate from opening. As the piston 2 continues its upward movement under the influence of hydraulic fluid pressure beneath the piston, the sliding collar 19 will move upwardly on shaft 18 compressing the spring 23. When the spring compression force equals the seating force of the hydraulic fluid on valve 9, the valve will lift off its seat and the spring 23 will force the valve plate 12 into sealing engagement with the sealing surface 13 thus blocking the exhaust conduit 14 in the manner shown in Fig. 2.

With valve 9 unseated from seat 10 in the manner shown in the prior art version of the double acting fluid motor represented in Fig. 2, the hydraulic oil can now pass through conduit 7 and 26 into the region in the cylinder 1 above the piston 2. Since the surface area defined by the upper portion of the piston 2 and exposed to the fluid pressure, is greater than the surface area of the piston which is exposed to the fluid pressure in the lower region of the fluid motor below the piston, the piston and load member will be forced downwardly by the resulting fluid pressure induced force differential.

As the piston 2 nears the bottom of the cylinder 1 the sliding collar 20 will be contacted by the lower surface portion of the piston thus forcing the collar 20 downwardly and compressing the spring 23. The pressure of the hydraulic fluid within the upper region of the fluid motor acts on the surface area of the valve 12 and develops a resultant force holding the valve against the seat 13. As the piston continues its downward movement, the sliding collar 20 will be forced downwardly on the shaft 18 thereby compressing the spring 23. When the spring force equals the sealing force on the valve 12, the valve will lift off the valve seat 13 and the spring 22 will then rapidly shift the valving mechanism thereby seating valve 9 against the seat 10 as shown in Fig. 1. At this point, the flow of hydraulic fluid in passages 14 and 26 will have been changed by valve control such that it ceases in passage 26 and is permitted in passage 14 thus causing the piston to resume its upward stroke.

It can be seen, therefore, that the piston will reciprocate up and down within the cylinder under the influence of the hydraulic driving fluid. The rod 16 connecting valves 9 and 12 slides in bore 15 in the cylinder head 11. The fit of the pin 16 in bore 15 is controlled so as to limit the leakage of fluid between conduits 14 and 26.

In Fig. 2 representing the prior art, a seal 5 of the conventional configuration for a hydraulic cylinder is shown. The seal member 5 can be in the form of a conventional resilient O-ring as shown, or, if desired, take the form of one of the many commercially available seals. Oil leaking past this seal will escape from the hydraulic system and must be replaced. Under circumstances where oil leakage might contaminate other compositions such as paint or other mechanical devices, it is desirable to eliminate the leakage. Since leakage of fluid seals cannot be precluded indefinitely, unless the apparatus is regularly serviced prior to the development of leakage, it is desirable to provide a system for collecting the leaked fluid and providing for its proper disposal. According to the present invention, control and disposal of leaked fluid bypassing seal member 5 may conveniently take the form illustrated in Fig. 1 or Fig 3 which are merely representative examples of the present invention.

Fig. 1 illustrates incorporation of the present invention in a double acting hydraulic motor such as is typically utilized to drive paint pumps. In this embodiment a secondary seal 26 is employed to establish additional sealing between the housing structure of the fluid motor and the load bearing output shaft 4. The secondary seal 26 cooperates with seal 5 to isolate an annular leakage collection chamber 27 which is defined by an annular cavity in the housing structure which surrounds the load bearing member. A passage 28 provides communication between the leakage collection chamber 27 and the passage 14 of the return line of the fluid supply system. The passage 28 is defined in part by the housing structure of the double acting motor and also by a conduit extending from the housing and being interconnected with a conduit defining passage 14 of the pressurized fluid supply system. The conduit forming passage 28 defines a check valve having a valve seat 29 against which a ball check member 30 is adapted to seat. The ball check member 30 is loaded by means of a compression spring 31 thus normally inducing the ball check to remain seated against the valve seat 29. The region above the ball check member 30 is communicated by a port 32 with the oil discharge conduit 14 of the double acting motor. For most of one operating cycle of the double acting motor, while valve 12 is seated on seat 13, the pressure in passage 14 will be slightly above or below atmospheric pressure depending upon the relative height of the fluid in the reservoir to the height of the passage 14. The ball check 30 will remain seated against its valve seat 29 by the force of compression spring 31 and thus oil is prevented from entering conduit 28. The spring bias on the ball check member 30 should be sufficient to prevent the ball from unseating if the pressure in passage 14 is below atmospheric when the fluid in passage 14 is at rest. At the reversal of the piston at the top of its stroke, the oil flowing from above the piston to the channel 14 is suddenly interrupted by the closing of valve 12 onto seat 13. The closing of valve 12 with fluid in motion in the passage 14 will result in the development of a negative pressure wave or pulse travelling away from the valve 12 and down the passage 14 past the orifice 32. It has been found that this negative pressure wave will momentarily unseat the ball check member 30 and thereby create a vacuum in the passage 28 and the leakage collection chamber 27. Each time the valve 12 reverses at the top of its stroke a similar vacuum pumping action will take place. It is therefore a simple matter to maintain a negative pressure condition in passage 28 and leakage collection chamber 27. It will now be evident that this will serve to keep oil from leaking out of the system. Oil which may leak past seal 5 will remain in the leakage collection chamber 27 because of the negative pressure in the cavity. If any leakage occurs past the secondary seal 26, it will take the form of air being drawn from the atmosphere into the leakage collection chamber 27 by virtue of the negative pressure condition in the passage 26 and the leakage collection chamber. Because of this negative pressure condition, oil, if present in the leakage chamber will not flow past the secondary seal. If a quantity of oil enters the leakage collection chamber 27 and passage 28 to completely fill the passage 28, the oil will simply be siphoned past the ball check member 30 into the fluid discharge passage 14 to be transported by passage 14 to the oil reservoir.

It will be obvious to one skilled in the art that the vacuum generated in passage 28 could, upon suitable ducting, be used to purge oil from seals elsewhere in the hydraulic system. In a paint pump application, for example, the device could be used to prevent leakage from seals on a hydraulic motor driven agitator which might be located adjacent to the paint pump. Similarly, in apparatus other than paint pumps where mechanical devices having pressure energized fluid systems are utilized negative pressure pulses in the pressurized fluid supply system may be similarly utilized for activities that are developed by negative pressure.

An alternative seal design for the subject invention is illustrated in Fig. 3. In this configuration the secondary seal 26′ is of a conventional wiper design with the lips of the seal directed upwardly. Oil leaking past the primary seal 5′ will collect in the leakage collection chamber 32 below the lip of the seal member. In this case the seal member functions as a wiper to remove fluid from the shaft of the load bearing member and direct it outwardly into the leakage collection chamber. A fluid passage 33 connects the region between the seals 5′ and 26′ to atmospheric pressure. A small diameter capillary conduit 28′ connects to region 32 where the oil collects to a check valve that may be identical with the check valve 29 of Fig. 1.

In this arrangement the oil leaking past seal 5 will be continuously siphoned off with each vacuum pulse as air flows through the conduits 33 and 28′, and the region between seals 5′ and 26′ will always remain completely free of oil. This configuration is preferred if rolling or turning of the seal 26 in Fig. 1 allows for some leakage, even under vacuum conditions. The use of a capillary tube for conduit 28′ prevents oil which has been collected from running back down into the seal cavity.

It will be readily apparent that the invention disclosed herein can cover a wide range of hydraulic devices and is not limited to use in a reversing cylinder of the type shown. Any time a flow of fluid is rapidly interrupted a negative pulse is generated downstream and such negative pulse can be utilized according to this invention as the motive force to draw fluid from seals at any point in the system.

In view of the foregoing it is respectfully submitted that a novel method has been provided by the present invention which enables vacuum induced collection of seal leakage in mechanical devices such as fluid energized motors having negative pressure waves or pressure pulses in the pressurized fluid systems for operation thereof. These negative pressure waves or pulses may also be employed to provide other negative pressure induced functions as is desirable and within the capability within the equipment involved.

In view of the foregoing, it is clear that an automatically activated anti-leakage system has been effectively developed for double acting pump motors and other mechanical devices which accomplishes all of the features and objects herein above set forth together with other features which are inherent in the apparatus itself.

## Claims

1. A method for recovering leaked liquid in apparatus having a hydraulic system for operation thereof which develops negative pressure pulses of a pressure below atmospheric pressure, said method being characterised by:
(a) providing leakage collection means to receive said leaked liquid; and
(b) applying said negative pressure pulses to said leakage collection means for inducing flow of said leaked liquid from said leakage collection means in to said hydraulic system only during said negative pressure pulses.

2. A method as claimed in claim 1, characterised by maintaining said leakage collection means at environmental pressure at times other than during said periodic negative pulses.

3. A method as claimed in claim 1, characterised in that said environmental pressure is atmospheric pressure.

4. A method as claimed in claim 1, characterised in that said apparatus incorporates a housing having an internal movable member extending from said housing and seal means normally establishing a seal between said housing and said internal movable member, and:
(a) said leakage collection means is a chamber defined by said housing and located externally of said seal means;
(b) passage means communicates said leakage collection means with said hydraulic system; and
(c) check valve means controls communication between said passage means and said hydraulic system only during the presence of negative pressure pulses in said hydraulic system.

5. A method as claimed in claim 1, characterised by preventing leakage of said fluid from said leakage collection means.

6. A method as claimed in claim 1, characterised in that said leakage collection means is a chamber defined by said housing, said apparatus forming leakage passage means communicating said chamber with said hydraulic system and having a check valve permitting vacuum induced flow of leaked liquid from said chamber and preventing flow of hydraulic fluid from said hydraulic system to said chamber.

7. Apparatus having a hydraulic system for operation thereof and developing negative pressure pulses in said hydraulic system during such operation by sudden interruption of the flow of column of hydraulic fluid, comprising a source (27) of liquid intended for movement, passage means (28) communicating said source of liquid with said hydraulic system, and control means (30) permitting communication between said source of liquid and said hydraulic system only during the presence of negative pressure pulses in said hydraulic system, whereby said liquid is subjected to said negative pressure pulses for vacuum induced movement thereof, characterised by housing means forming a portion of said hydraulic system and incorporating a movable element (4) extending from an opening of said housing means, seal means (5) establishing a seal between said housing means and said movable element, leakage collection means (27) defined by said housing means, said passage means (28) being in communication with said leakage collection means and said hydraulic system, and said control means being pressure responsive valve means permitting communication between the said hydraulic system and said leakage collection means only during the presence of negative pressure pulses in said hydraulic system.

8. Apparatus as claimed in claim 7, characterised in that said passage means is a capillary passage (28') extending from said leakage collection means to said check valve.

9. Apparatus as claimed in claim 8, characterised in that said seal means comprises primary and secondary seal elements (5', 26') each establishing a seal between said housing means and said internal movable element, said primary and secondary seal elements being disposed on opposite sides of said leakage collection means.

10. Apparatus as claimed in claim 9, characterised by vent passage means (33) communicating said leakage collection means with environmental pressure.

11. Appparatus as claimed in claim 9, characterised in that said primary and secondary seal elements (5' 26') are in the form of circular sealing elements.

12. Apparatus as claimed in claim 11, characterised in that said secondary sealing element (26') is in a form of an annular wiping ring having a thin circular wiping lip in contact with said internal movable element, said thin circular wiping lip being oriented to direct leaked liquid to said passage means.

## Patentansprüche

1. Verfahren zur Rückgewinnung von Leckflüssigkeit in einer Vorrichtung, die zu ihrem Betrieb ein Hydrauliksystem aufweist, das negative Druckimpulse eines Drucks unterhalb Atmosphärendruck erzeugt, wobei das Verfahren gekennzeichnet ist durch:
(a) Vorsehen einer Sammeleinrichtung zur Aufnahme der Leckflüssigkeit; und
(b) Aufbringen der negativen Druckimpulse auf die Leckflüssigkeits-Sammeleinrichtung, um den Durchfluß der Leckflüssigkeit aus der Leckflüssigkeits-Sammeleinrichtung in das Hydrauliksystem nur während der negativen Druckimpulse zu induzieren.

2. Verfahren nach Anspruch 1, gekennzeichnet durch Halten der Leckflüssigkeits-Sammeleinrichtung auf Umgebungsdruck zu den von den periodischen negativen Impulsen verschiedenen Zeiten.

3. Verfahren nach Anspruch 1, dadurch gekennzeichnet, daß der Umgebungsdruck Atmosphärendruck ist.

4. Verfahren nach Anspruch 1, dadurch gekennzeichnet, daß die Vorrichtung ein Gehäuse, das ein inneres bewegliches Element hat, das von dem Gehäuse ausgeht, und eine Dichtungseinrichtung aufweist, die normalerweise eine Abdichtung zwischen dem Gehäuse und dem inneren beweglichen Element bewirkt, und:
(a) die Leckflüssigkeits-Sammeleinrichtung eine Kammer ist, die von dem Gehäuse definiert und außerhalb der Abdichteinrichtung positioniert ist;
(b) eine Durchgangseinrichtung die Leckflüssigkeits-Sammeleinrichtung mit dem Hydrauliksystem in Verbindung bringt; und
(c) ein Absperrventil die Verbindung zwischen der Durchgangseinrichtung und dem Hydrauliksystem nur während der Anwesenheit von negativen Druckimpulsen in dem Hydrauliksystem steuert.

5. Verfahren nach Anspruch 1, gekennzeichnet durch Verhindern von Auslaufen des Fluids aus der LeckflüssigkeitsSammeleinrichtung.

6. Verfahren nach Anspruch 1, dadurch gekennzeichnet, daß die Leckflüssigkeits-Sammeleinrichtung eine von dem Gehäuse definierte Kammer ist, wobei die Vorrichtung eine Leckflüssigkeits-Durchgangseinrichtung bildet, die die Kammer mit dem Hydrauliksystem verbindet und ein Absperrventil hat, das einen durch Vakuum induzierten Durchfluß von Leckflüssigkeit aus der Kammer zuläßt und einen Durchfluß von Hydraulikfluid aus dem Hydrauliksystem zu der Kammer verhindert.

7. Vorrichtung, die zu ihrem Betrieb ein Hydrauliksystem hat und in dem Hydrauliksystem während eines solchen Betriebs durch plötzliche Unterbrechung der Durchflußsäule von Hydraulikfluid negative Druckimpulse entwickelt, wobei die Vorrichtung folgendes aufweist: eine Quelle (27) von zum Bewegen bestimmter Flüssigkeit, eine Durchgangseinrichtung (28), die die Flüssigkeitsquelle mit dem Hydrauliksystem verbindet, und eine Steuereinrichtung (30), die eine Verbindung zwischen der Flüssigkeitsquelle und dem Hydrauliksystem nur während der Anwesenheit von negativen Druckimpulsen in dem Hydrauliksystem zuläßt, wodurch die Flüssigkeit den negativen Druckimpulsen zu ihrer durch Vakuum induzierten Bewegung ausgesetzt wird, gekennzeichnet durch eine Gehäuseeinrichtung, die einen Teil des Hydrauliksystem bildet und aufweist: ein bewegliches Element (4), das von einer Öffnung der Gehäuseeinrichtung ausgeht, eine Dichtungseinrichtung (5), die eine Abdichtung Zwischen der Gehäuseeinrichtung und dem beweglichen Element bewirkt, eine Leckflüssigkeits-Sammeleinrichtung (27), die von der Gehäuseeinrichtung definiert ist, wobei die Durchgangseinrichtung (28) mit der Leckflüssigkeits-Sammeleinrichtung und dem Hydrauliksystem in Verbindung ist und die Steuereinrichtung eine druckempfindliche Ventileinrichtung ist, die eine Verbindung zwischen dem Hydrauliksystem und der Leckflüssigkeits-Sammeleinrichtung nur während der Anwesenheit von negativen Druckimpulsen in dem Hydrauliksystem zuläßt.

8. Vorrichtung nach Anspruch 7, dadurch gekennzeichnet, daß die Durchgangseinrichtung ein Kapillardurchgang (28') ist, der von der Leckflüssigkeits-Sammeleinrichtung zu dem Absperrventil verläuft.

9. Vorrichtung nach Anspruch 8, dadurch gekennzeichnet, daß die Dichtungseinrichtung ein primäres und ein sekundäres Dichtungselement (5', 26') aufweist, die jeweils eine Abdichtung zwischen der Gehäuseeinrichtung und dem inneren beweglichen Element bewirken, wobei das primäre und das sekundäre Dichtungselement auf entgegengesetzten Seiten der Leckflüssigkeits-Sammeleinrichtung angeordnet sind.

10. Vorrichtung nach Anspruch 9, gekennzeichnet durch eine Lüftungskanaleinrichtung (33), die die Leckflüssigkeits-Sammeleinrichtung mit Umgebungsdruck verbindet.

11. Vorrichtung nach Anspruch 9, dadurch gekennzeichnet, daß das primäre und das sekundäre Dichtungselement (5', 26') kreisrunde Dichtungselemente sind.

12. Vorrichtung nach Anspruch 11, dadurch gekennzeichnet, daß das sekundäre Dichtungselement (26') als ein ringförmiger Schleifring ausgebildet ist, der eine dünne kreisrunde Schleiflippe in Kontakt mit dem inneren beweglichen Element hat, wobei die dünne kreisrunde Schleiflippe orientiert ist, um Leckflüssigkeit zu der Durchgangseinrichtung zu leiten.

## Revendications

1. Procédé pour récupérer un liquide de fuite dans un appareil ayant un système hydraulique pour son fonctionnement, système qui produit des impulsions de pression négative d'une pression inférieure à la pression atmosphérique, ce procédé étant caractérisé en ce que :
a) on prévoit des moyens recueillant la fuite afin de recevoir le liquide de fuite et
b) on applique les impulsions de pression négative au moyen recueillant la fuite de liquide afin de provoquer un écoulement du liquide de fuite, à partir des moyens recueillant la fuite de liquide; vers et dans le système hydraulique uniquement pendant les impulsions de pression négative.

2. Procédé suivant la revendication 1 caractérisé en ce qu'on maintient les moyens recueillant la fuite de liquide à la pression ambiante à tous les moments autres que ceux pendant lesquels les impulsions de pression négative périodiques sont produites.

3. Procédé suivant la revendication 1 caractérisé en ce que la pression ambiante est la pression atmosphérique.

4. Procédé suivant la revendication 1 caractérisé en ce que l'appareil comporte un corps ayant un organe interne mobile s'étendant à partir du corps et un joint d'étanchéité établissant normalement une étanchéité entre le corps et l'organe interne mobile, et
a) les moyens recueillant la fuite de liquide sont constitués par une chambre définie par le corps et disposée vers l'extérieur par rapport au joint d'étanchéité;
b) un passage met en communication les moyens recueillant la fuite de liquide avec le système hydraulique, et
c) une soupape anti-retour commande la communication entre le passage et le système hydraulique uniquement pendant la présence d'impulsions de pression négative dans le système hydraulique.

5. Procédé suivant la revendication 1 caractérisé en ce qu'on empêche une fuite du fluide à partir des moyens recueillant la fuite de liquide.

6. Procédé suivant la revendication 1 caractérisé en ce que les moyens recueillant la fuite de liquide sont constitués par une chambre définie par le corps, l'appareil formant un passage de fuite établissant une communication entre cette chambre et le système hydraulique et comportant une soupape anti-retour permettant un écoulement du liquide de fuite, provoqué par une dépression, à partir de la chambre et empêchant l'écoulement du fluide hydraulique à partir du système hydraulique et en direction de la chambre.

7. Appareil comportant un système hydraulique pour son fonctionnement et produisant des impulsions de pression négative dans ce système hydraulique, pendant son fonctionnement, par suite de l'interruption soudaine de l'écoulement d'une colonne de fluide hydraulique, comprenant une source (27) de liquide destiné à provoquer le mouvement, un passage (28) établissant une communication entre la source de liquide et le système hydraulique et un moyen de commande (30) permettant une communication entre la source de liquide et le système hydraulique uniquement pendant la présence d'impulsions de pression négative dans le système hydraulique, de telle façon que le liquide soit soumis aux impulsions de pression négative pour permettre son mouvement provoqué par une dépression, caractérisé en ce qu'il comporte un corps constituant une partie du système hydraulique et comportant un élément mobile (4) s'étendant à partir d'une ouverture du corps, un joint d'étanchéité (s) établissant une étanchéité entre le corps et l'élément mobile, des moyens (27), définis par le corps, pour recueillir une fuite de liquide, le passage (28) étant en communication avec les moyens recueillant la fuite de liquide et avec le système hydraulique, le moyen de commande étant un clapet sensible à la pression établissant une communication entre le système hydraulique et les moyens recueillant la fuite de liquide uniquement pendant la présente d'impulsions de pression négative dans le système hydraulique.

8. Appareil suivant la revendication 7 caractérisé en ce que le passage est un passage capillaire (28') s'étendant à partir des moyens recueillant la fuite de liquide jusqu'au clapet anti-retour.

9. Appareil suivant la revendication 8 caractérisé en ce que le moyen d'étanchéité comprend des joints d'étanchéité primaire et secondaire (5',26') établissant chacun une étanchéité entre le corps et l'élément interne mobile, les joints d'étanchéité primaire et secondaire étant disposés des deux côtés opposés des moyens recueillant la fuite de liquide.

10. Appareil suivant la revendication 9 caractérisé en ce qu'il comporte un passage d'échappement (33) établissant une communication entre les moyens recueillant la fuite de liquide et la pression ambiante.

11. Appareil suivant la revendication 9 caractérisé en ce que les joints d'étanchéité primaire et secondaire (5',26') sont réalisés sous la forme d'éléments d'étanchéité circulaires.

12. Appareil suivant la revendication 11 caractérisé en ce que l'élément d'étanchéité secondaire (26') est réalisé sous la forme d'une bague de balayage ayant une mince levre de balayage circulaire en contact avec l'élément interne mobile, cette mince lèvre de balayage circulaire étant orientée de manière à diriger le liquide de fuite vers le passage.
